Europäisches Patentamt

European Patent Office

Office européen des brevets

(19)

(11) Veröffentlichungsnummer : **0 109 981**
**B1**

(12) **EUROPÄISCHE PATENTSCHRIFT**

(45) Veröffentlichungstag der Patentschrift :
16.06.87

(21) Anmeldenummer : 82111312.3

(22) Anmeldetag : 07.12.82

(51) Int. Cl.⁴ : **G 06 F 11/20**

(54) Ausfallgesicherte Datenverarbeitungsanlage.

(43) Veröffentlichungstag der Anmeldung :
**13.06.84 Patentblatt 84/24**

(45) Bekanntmachung des Hinweises auf die Patenterteilung : **16.06.87 Patentblatt 87/25**

(84) Benannte Vertragsstaaten :
**DE FR GB**

(56) Entgegenhaltungen :
**DE-A- 2 460 259
DE-A- 2 727 983
US-A- 3 641 505
US-A- 3 818 199
US-A- 3 864 670
US-A- 3 964 056
US-A- 4 208 715
IBM TECHNICAL DISCLOSURE BULLETIN, Band 17,
Nr. 3, August 1974, Seite 746, New York, USA. C.
EVBORN et al.: "Data transfer between two controller
units"**

(73) Patentinhaber : **IBM DEUTSCHLAND GMBH
Pascalstrasse 100
D-7000 Stuttgart 80 (DE)
DE
International Business Machines Corporation
Old Orchard Road
Armonk, N.Y. 10504 (US)
FR GB**

(72) Erfinder : **Eibach, Wolfgang
Eberhardstrasse 38
D-7031 Holzgerlingen (DE)**
Erfinder : **Roehr, Kuno Manfred, Dr.
Reiherweg 12
D-7030 Böblingen (DE)**
Erfinder : **Schulz, Klaus M., Dr.
Kirschhalde 19
D-7031 Aidlingen (DE)**

(74) Vertreter : **Teufel, Fritz, Dipl.-Phys.
IBM Deutschland GmbH. Europäische Patentdienste
Postfach 265
D-8000 München 22 (DE)**

**Beschreibung**

Die Erfindung betrifft eine ausfallgesicherte Datenverarbeitungsanlage nach dem Oberbegriff des Anspruchs 1.

Datenverarbeitungsanlagen werden immer häufiger für Aufgaben eingesetzt, die keine Unterbrechung des Bearbeitungsablaufs erlauben ; Beispiele hierfür sind die Steuerung von Industrieprozessen, die Überwachung von Raumfahrtmissionen oder die Abwicklung des Geschäftsbetriebs einer Bank. Wartungsarbeiten oder Fehler dürfen bei derartigen Systemen höchstens zu einer zeitweisen Verringerung der Leistungsfähigkeit, nicht aber zu einem vollständigen Stillstand der Arbeit führen.

Um dieses Ziel zu erreichen, werden für solche Aufgaben Systeme mit eingebauter Redundanz herangezogen, bei denen die noch intakten Komponenten die Arbeit der ausgefallenen übernehmen können. Die dazu notwendigen Umschaltungen (die sogenannte Rekonfiguration) wird von vielen Systemen selbst durchgeführt, sobald sie eine entsprechende Fehlerbedingung feststellen.

Redundante Systeme sind beispielsweise in dem Artikel « Development of On-board Space Computer Systems » von A.E. Cooper und W.T. Chow in IBM Journal of Research and Development, Januar 1976 und in der deutschen Offenlegungsschrift 2 108 836 beschrieben.

Eine Schaltungsanordnung zur gevielfachten Steuerung ist aus der DE-A-2 727 983 bekannt, bei der die Steuerung von Peripheriegeräten von einem Reserveprozessor übernommen wird, wenn der eigentliche Steuerprozessor ausfällt.

Eine speziell vorgesehene Überwachungseinheit aktiviert dazu die Leitungen des Reserveprozessors zu den Peripheriegeräten und legt (die davon getrennten) Leitungen des eigentlichen Steuerprozessors still. Zur Kommunikation zwischen den Prozessoren ist eine besondere Leitungsverbindung vorgesehen.

Der Aufwand für die Konzeption und die Herstellung derartiger Verbundsysteme ist jedoch beträchtlich, da üblicherweise sowohl die Schaltungen, die sog. Hardware, als auch die Steuerprogramme, die sog. Betriebssysteme, speziell darauf ausgerichtet werden müssen. Da für viele Anwendungen aus wirtschaftlichen Gründen dieser Aufwand nicht tragbar ist, mußte bisher der an sich wünschenswerte Einsatz von Rechnern unterbleiben oder auf bestimmte, weniger zeitkritische Aspekte beschränkt werden.

Die vorliegende Erfindung stellt sich daher die Aufgabe, eine ausfallgesicherte Datenverarbeitungsanlage der eingangs genannten Art anzugeben, die aus bestehenden Rechnern ohne Eingriff in deren Hardware und nur mit geringfügigen Änderungen bestehender Betriebssysteme aufgebaut werden kann.

Diese Aufgabe wird durch die im Anspruch 1 gekennzeichnete Erfindung gelöst ; Ausgestaltungen der Erfindung sind in den Unteransprüchen gekennzeichnet. Der Anspruch 11 bezieht sich auf die Umschalteinheit in einer solchen Datenverarbeitungsanlage.

Ein wesentliches Merkmal der vorliegenden Erfindung betrifft das Umschalten von sogenannten Peripheriegeräten (z. B. Bildschirmgeräte oder Drucker) in einem Multiprozessorsystem, bei dem ein Prozessor die Aufgabe eines ausgefallenen anderen Prozessors übernehmen kann. Da bei modernen Rechnersystemen für sogenannten On-line Anwendungen eine sehr große Anzahl von Bildschirmgeräten angeschlossen sein kann und beim Ausfall eines Prozessors oft nicht alle daran angeschlossenen Bildschirme umgeschaltet werden sollen, um die Kapazität des weiteren Prozessors (der seinerseits eigene Bildschirmgeräte zu verwalten hat) nicht zu überlasten, kommt es außerdem darauf an, eine selektive, einfache und ohne hohen Kostenaufwand zu realisierende Umschaltmöglichkeit zu haben. Dazu wird von der Erfindung eine besondere Umschalteinheit vorgeschlagen, die für jedes anschließbare Peripheriegerät einen mechanischen Umschalter enthält, der unter Steuerung des Betriebsprogramms von jedem der angeschlossenen Prozessoren gesetzt werden kann. Die Umschalteinheit selbst wird wie ein sonstiges Peripheriegerät an jeden der Prozessoren angeschlossen und kann somit ohne Eingriff in dessen Hardwaresteuerung adressiert und mit Befehlen beaufschlagt werden.

Da beide Prozessoren über getrennte Anschlüsse (Ports) mit der Umschalteinheit verbunden sind, können sie auf diesem Weg miteinander kommunizieren. Der Anschluß zweier herkömmlicher Rechner an die Umschalteinheit läßt so ohne jeden weiteren Eingriff in die Rechnerhardware eine Multiprozessoranlage entstehen. Die notwendige Steuerung erfolgt dabei über die sog. Betriebsprogramme.

Zum Umschalten der übrigen Rechnerkomponenten, beispielsweise der Kanäle und der Plattenspeicher, werden die in modernen Systemen vorhandenen Einrichtungen herangezogen (sog. Kanalumschalter oder Strangumschalter). Zum Schutz gegen den Ausfall von Plattenspeichern werden diese in Paaren eingesetzt und der Informationsgehalt eines Plattenspeichers jeweils auf dem zugeordneten dupliziert (sog. « gespiegelte » Plattenspeicher).

Das hier vorgeschlagene Mehrprozessorsystem erlaubt es, mit einem minimalen Aufwand an zusätzlichen Schaltungen eine ausfallgesicherte Datenverarbeitungsanlage mit einer Vielzahl von Peripheriegeräten aufzubauen ; die dazu verwendete Umschalteinrichtung kann ohne weitere Eingriffe in die bestehenden Systeme direkt vom Betriebsprogramm aus gesteuert werden und ist trotz ihres einfachen Aufbaus sehr flexibel und betriebssicher.

Ausführungsbeispiele der Erfindung werden nun anhand von Zeichnungen näher erläutert. Es zeigen :

Figur 1 in schematischer Weise den Aufbau eines Duplex-Prozessors mit umschaltbaren Peripherieeinheiten

Figur 2 eine schematische Darstellung der in den beiden Prozessoren nach Fig. 1 ablaufenden Prozesse

Figur 3 den schematischen Aufbau einer Umschalteinrichtung für Peripheriegeräte

Figur 4 ein detaillierteres Blockschaltbild der Umschalteinrichtung nach Fig. 3

Figur 5 die Ansteuerschaltungen für die mechanischen Schalter der Umschalteinheit nach Fig. 3 und 4.

Figuren 6A, B Beispiele für Parallel- und Reihenschaltungen von Umschalteinheiten nach Fig. 3.

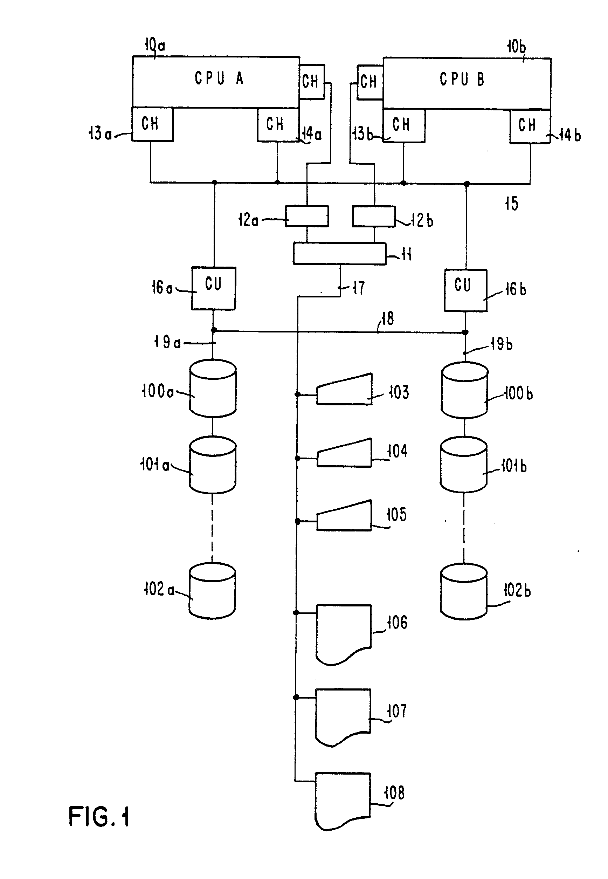

Fig. 1 zeigt als Beispiel eines ausfallgesicherten, gekoppelten Multiprozessorsystems ein aus den beiden Prozessoren CPU A mit Bezugszeichen 10a und CPU B mit Bezugszeichen 10b bestehendes Duplex-System. In der folgenden Beschreibung werden gleiche Komponenten, die jeweils einem der beiden Prozessoren zugeordnet sind, durch die Indices a, b unterschieden ; in allen Figuren sind gleiche Komponenten mit jeweils gleichen Bezugszeichen versehen. Die Plattenspeicher (100 ... 102) eines jeden Prozessors sind über Kanalanschlüsse (CH) 13, 14, Sammelleitungen 15, Steuereinheiten (CU) 16 und weitere Sammelleitungen 19 angeschlossen. Die Kanalanschlüsse 13, 14 der Prozessoren sind durch einen nicht dargestellten Kanalumschalter so meiteinander verbunden, daß die Sammelleitung 15 wahlweise an jedem Kanal angeschlossen werden kann. In ähnlicher Weise sind die von den Steuereinheiten 16 ausgehenden Sammelleitungen 19 durch einen sogenannten Strangumschalter (mit Sammelleitung 18) so miteinander verbunden, daß jeder (mindestens aber ein) « Strang » von Plattenspeichern 100 bis 102 von jeder der Steuereinheiten 16 gesteuert werden kann.

Weitere Peripheriegeräte beider Prozessoren, z. B. die Bildschirmgeräte 103 bis 105 oder die Drucker 106 bis 108 sind jeweils über individuelle Koaxialkabel 17 mit den einzelnen Anschlüssen einer Umschalteinheit 11 verbunden, die ihrerseits über Anpaßschaltungen 12a, 12b mit einem Kanalanschluß (CH) der Prozessoren 10a, 10b verbunden ist. Die Stellung des einzelnen Schalters der Umschalteinheit 11 bestimmt dabei den jeweiligen Prozessor, dem das Peripheriegerät in einem bestimmten Augenblick zugeordnet ist.

Die Kanal- und Strangumschaltung des Duplex-Systems nach Fig. 1 und die Umschalteinrichtung 11 ermöglichen es, jedes Peripheriegerät wahlweise jedem der Prozessoren zuzuordnen und so im Fehlerfall oder bei geplanter Abschaltung zu Wartungszwecken eine Rekonfiguration des Rechnersystems durchzuführen.

In einer anderen Ausgestaltung des Duplex-Systems nach Fig. 1 kann die Umschalteinheit 11 den Prozessoren auch direkt und ohne Verwendung von Kanalanschlüssen zugeführt werden. In diesem Fall wird zur Rekonfiguration nur die Strangumschaltung und die Umschalteinheit 11 verwendet.

Anstelle der in Fig. 1 schematisch dargestellten einzelnen Plattenspeichern 100 bis 102 können auch jeweils doppelte Plattenspeichereinheiten vorgesehen werden, die jeweils exakt dieselbe Information enthalten. Dazu wird unter Steuerung des Betriebssystems jeder von einem Programm gegebene Schreibbefehl verdoppelt und auf beide gekoppelte Plattenspeichereinheiten parallel angewandt. Neben der Verbesserung der Verfügbarkeit ergibt sich bei dieser Anordnung der weitere Vorteil einer verbesserten Zugriffszeit bei Lesevorgängen, da die Positionierung der Lese/Schreibköpfe in beiden Platten unabhängig voneinander durchgeführt werden kann. Zur weiteren Erhöhung der Sicherheit können die beiden « gespiegelten » Plattenspeicher in verschiedenen « Strängen » angeschlossen werden.

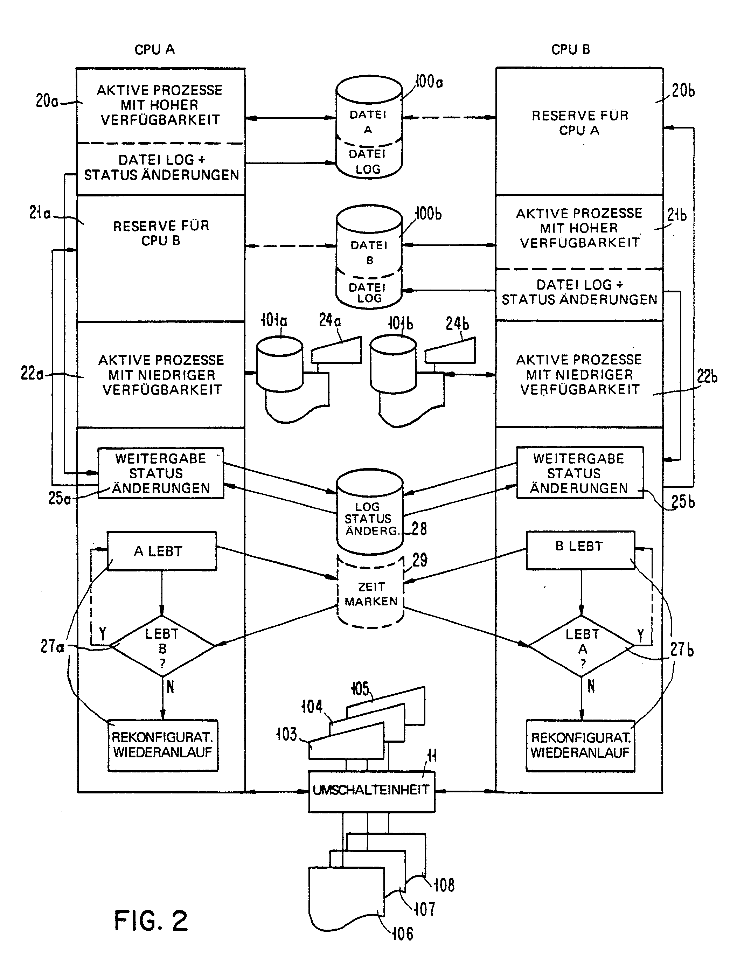

Fig. 2 zeigt ein schematisches Beispiel der Verteilung einer Arbeitslast auf die beiden Prozessoren CPU A, CPU B des Duplex-Systems nach Fig. 1. In beiden Prozessoren laufen jeweils Anwendungsprogramme 20a, 21b ab, die nicht unterbrochen werden dürfen. Im jeweils anderen System sind zu diesem Zweck jeweils nichtaktive Reserveprogramme 20b, 21a vorgesehen, die jederzeit bei Ausfall des anderen Systems die Arbeit an dem Punkt fortsetzen können, an dem die Unterbrechung aufgetreten ist ; vor dem Starten des Reserveprogramms müssen Wiederanlauf-Prozeduren durchgeführt werden, um einen wohldefinierten Systemzustand (z. B. der verwendeten Dateien) wieder herzustellen. Die von den Anwendungen bearbeiteten Daten sind in Dateien oder Datenbanken auf Plattenspeichern 100a bzw. 100b untergebracht, zu denen auch das Reserveprogramm zugreifen kann, nachdem die anhand von Fig. 1 erläuterte Rekonfiguration der Verbindungen durchgeführt wurde.

Damit die Reserveprogramme jeweils über den aktuellen Stand der Hauptprogramme unterrichtet sind, kann jeder Prozessor Kommunikationseinrichtungen 25a bzw. 25b (z. B. Programme) enthalten, die den jeweiligen Zustand des aktiven Programms (z. B. 20a) und der Dateien übermittelt bekommen und über eine Datei auf einer Platteneinheit 28 an den anderen Prozessor abgeben. Die Platteneinheit 28 speichert dann die aufgetretenen Änderungen. Ohne derartige Kommunikationseinheiten muß das Reserveprogramm erst vor Wiederaufnahme der Arbeit den Zustand des ausgefallenen Prozessors wiederherstellen.

Neben den Anwendungen mit hoher Verfügbarkeit und dem Reserveprogramm für den jeweils anderen Prozessor können in jedem der Prozessoren noch weitere Anwendungen 22a, 22b durchgeführt werden, bei denen Unterbrechungen weniger schädlich sind. Diesen Anwendungen können Peripheriegeräte zugeordnet sein (z. B. Plattenspeicher 101, Drucker 23 und Bildschirmgeräte 24, die bei einer Unterbrechung nicht umgeschaltet werden. Die Anwendungen 22a und 22b können beispielsweise dann unterbrochen werden, wenn einer der Prozessoren die Anwendungen hoher Verfügbarkeit des anderen Prozessors übernehmen muß und dazu zusätzliche Kapazität benötigt.

In den Betriebssystemen beider Prozessoren CPU A, CPU B sind Überwachungseinrichtungen 27a, 27b enthalten, die laufend den Zustand des eigenen und des anderen Prozessors überwachen. Bei ungestörtem Betrieb gibt jede dieser Überwachungseinrichtungen Lebenszeichen (Zeitmarken) an eine Plattenspeichereinheit 29, die in regelmäßigen Abständen von der anderen Überwachungseinrichtung abgefragt werden. Fehlen diese Lebenszeichen, so leitet der noch intakte Prozessor die im Einzelfall erforderliche Rekonfiguration des Gesamtsystems ein, indem entsprechende Befehle an die Umschalteinheit 11 und die Kanalumschalt- bzw. Strangumschalteinheiten gegeben werden.

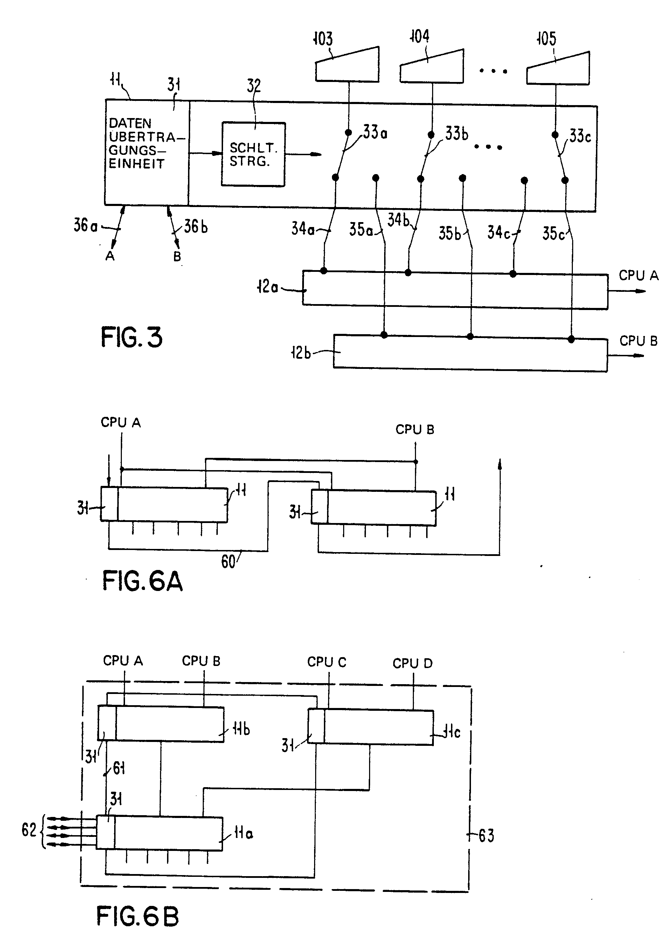

Fig. 3 zeigt den prinzipiellen Aufbau der Umschalteinheit 11 für Peripheriegeräte wie Bildschirme und Drucker. Für jedes der anschließbaren Geräte 103 bis 105 ist ein mechanischer, z. B. zweipoliger Schalter 33a bis 33c vorgesehen, der entweder manuell oder durch eine Schaltersteuerung 32 gesetzt werden kann. Die Schaltersteuerung 32 empfängt ihrerseits Instruktionen über eine Datenübertragungseinheit 31, die über Leitungen 36a, 36b mit beiden Prozessoren CPU A und CPU B in Verbindung steht. Über denselben Weg liefert die Schaltersteuerung 32 den Prozessoren CPU A und CPU B auch Informationen über die jeweilige Stellung eines jeden Schalters.

Die beiden Ausgänge der Schalter 33 sind über Koaxialkabel 34 bzw. 35 mit Konzentratoren 12a bzw. 12b verbunden, die jedes der Koaxialkabel mit den Prozessoren CPU A bzw. CPU B verbinden (z. B. im Zeitmultiplexverfahren). Auf der Frontfläche der Umschalteinheit 11 sind für jeden der mechanischen Schalter 33 die Schalterknöpfe zur Handbedienung sowie Anzeigelampen für die jeweilige Schalterstellung vorgesehen.

Mit der Umschalteinheit 11 kann somit jedes der angeschlossenen Peripheriegeräte 103 bis 105 wahlweise einem der beiden Prozessoren CPU A oder CPU B zugeordnet werden. Diese Zuordnung kann entweder manuell durch den Operator erfolgen oder unter Programmsteuerung, um ein bestimmtes Peripheriegerät einem bestimmten Anwendungsprogramm zuzuordnen. Im Fehlerfall können Peripheriegeräte, die nicht unterbrechbaren Anwendungen zugeordnet sind, vom ausgefallenen Prozessor auf den anderen Prozessor umgeschaltet werden ; dabei kann es erforderlich sein, Peripheriegeräte des intakten Prozessors, denen Aufgaben mit geringer Priorität zugeordnet sind, abzuschalten, um eine Überlastung zu vermeiden. Das Abschalten erfolgt hier automatisch in der Weise, daß der Schalter eines nicht mehr aktiven Geräts auf den ausgefallenen Prozessor geschaltet wird.

Die Schalter 33 werden vorzugsweise als zweipolige selbstverriegelnde Magnetrelais ausgeführt, mit denen gleichzeitig Seele und Abschirmung der Koaxialkabel 34, 35 umgeschaltet werden kann. Derartige Relais benötigen keine Energie, um ihre jeweilige Position aufrechtzuerhalten. Ein hier geeignetes Relais wird beispielsweise von der Firma Teledyne unter der Bezeichnung 420/22 hergestellt.

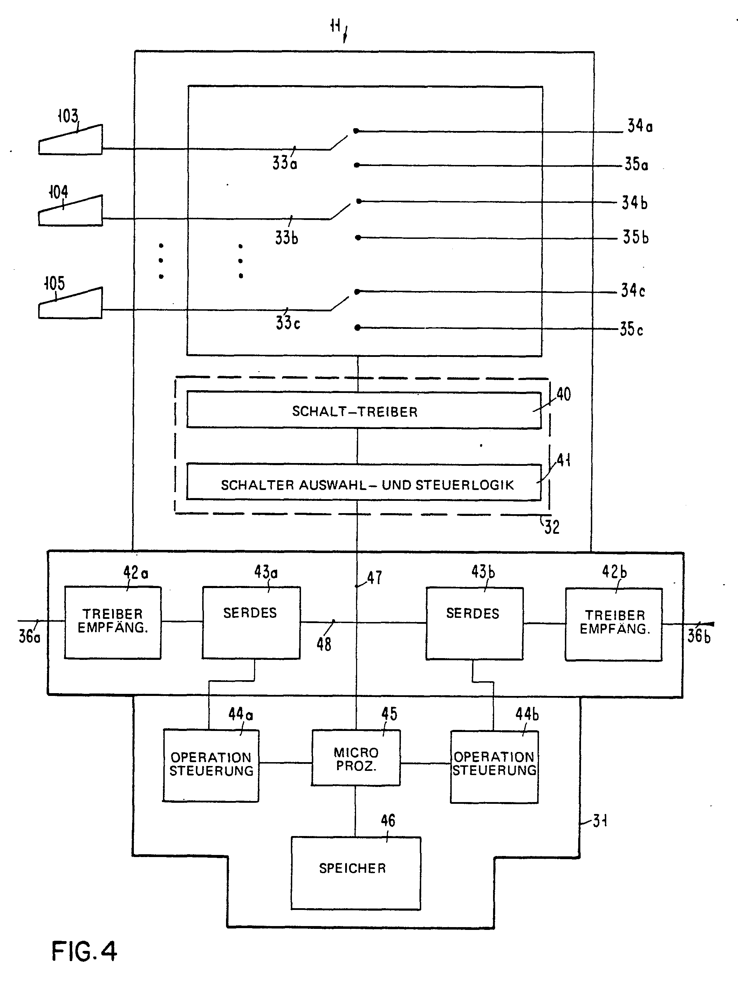

Fig. 4 zeigt in einem Blockdiagramm Einzelheiten der Datenübertragungseinheit 31 und der Schaltersteuerung 32 innerhalb der Umschalteinheit 11. Die Schalter 33a bis 33c werden durch Treiber 40 beaufschlagt, die ihrerseits durch eine Auswahl- und Steuerlogik 41 aktiviert werden. Die Steuerlogik 41 empfängt Befehle von einem Mikroprozessor 45 mit angeschlossenem Speicher 46. Die im Mikroprozessor 45 ablaufenden Programme werden durch eine Operationssteuerung 44a und 44b initiiert, die selbst wieder durch Befehle gesteuert wird, die von den Prozessoren CPU A und CPU B über Leitungen 36a, 36b, Leitungstreiber 42a, 42b und Serialisier/Deserialisierschaltungen (Serdes) 43a und 43b abgegeben werden. Die Leitungen 36a, 36b sind Koaxialleitungen, wie sie auch zum Anschluß anderer Peripheriegeräte an die Prozessoren verwendet werden. Durch entsprechende Programmierung des Mikroprozessors 45 und der Operationssteuerungen 44 wird erreicht, daß die Umschalteinheit 11 von den Prozessoren wie ein « normales » Peripheriegerät angesprochen werden kann, wenn an die Umschalteinheit Befehle zum Setzen ausgewählter Schalter gegeben werden sollen. Die Treiber/Empfängerschaltungen 42a, 42b sind daher ebenfalls in der aus anderen Peripheriegeräten bekannten Weise aufgebaut und enthalten z. B. Einrichtungen zur Wiederherstellung von Impulsformen, die während der Übertragung verändert wurden, Taktsignalgeber, Einrichtungen zur Trennung von Synchronisier- und Datenimpulsen usw.

Die Datenübertragung zwischen einem der Prozessoren CPU A oder CPU B und der Umschalteinheit 11 kann entweder durch direkte Verbindungen zwischen diesen Geräten erfolgen oder über eine zwischengeschaltete Steuereinheit. Ein Prozessor, der Umschalteinheit 11 ansprechen will, kann beispielsweise deren Adresse aussenden, die von der Steuereinheit oder der Umschalteinheit 11 selbst erkannt wird und diese dazu veranlaßt, die auf den Übertragungsleitungen anstehenden Signale aufzunehmen und zu verarbeiten. Wie schon erwähnt, ermöglicht es die Verwendung eines Mikroprozessors in der Umschalteinheit 11, diese an alle möglichen Übertragungsverfahren und Schnittstellenbedingungen anzupassen ; beispielsweise kann sie auf den Empfang von Daten nach dem sogenannten RS326-Verfahren eingestellt werden.

Da die Umschalteinheit 11 über zwei Anschlüsse für die Koaxialkabel 36a und 36b verfügt und diese über interne Datenwege miteinander verbunden sind (z. B. über Leitung 48 oder über den Mikroprozessor), können auch Datenaustauschvorgänge zwischen den Prozessoren CPU A und CPU B über die Umschalteinheit 11 abgewickelt werden, und zwar anstelle oder zusätzlich zum Kommunikationsweg über gemeinsam benutzbare Plattenspeicher, z. B. 28 oder 29. Dazu adressiert beispielsweise der eine Übertragung einleitende Prozessor die Umschalteinheit 11, die dann die ankommenden Daten zwischenspeichert (in Speichereinheit 46) ; anschließend gibt sie ein entsprechendes Signal an den zweiten angeschlossenen Prozessor, um diesen zu veranlassen, die zwischengespeicherten Daten abzurufen oder zu übernehmen.

Dieser Verbindungskanal zwischen den beiden Prozessoren CPU A und CPU B ist ausreichend, um zwei herkömmliche Prozessoren zu einer ausfallgesicherten Datenverarbeitungsanlage der hier geschilderten Art zusammenzuschalten.

Die Ausstattung der Umschalteinheit 11 mit einem Anschluß (sog. Port) für jeweils einen Prozessor hat die folgenden Vorteile :

zwischen den beiden Prozessoren wird ein neuer Kommunikationspfad eröffnet

Schreib- und Leseoperationen der beiden Prozessoren im Speicher 46 können überlappt erfolgen

beide Prozessoren können das Umschaltgerät in derselben Weise wie andere Peripheriegeräte adressieren (zum Datenaustausch oder um Befehle an die Umschalteinrichtung abzugeben).

In Datenverarbeitungsanlagen mit mehr als zwei Prozessoren können auch mehr als zwei Ports für die Umschalteinheit vorgesehen werden ; eine alternative Möglichkeit besteht darin, die Anschlüsse mehrerer zusammengeschalteter Umschalteinheiten miteinander zu verbinden.

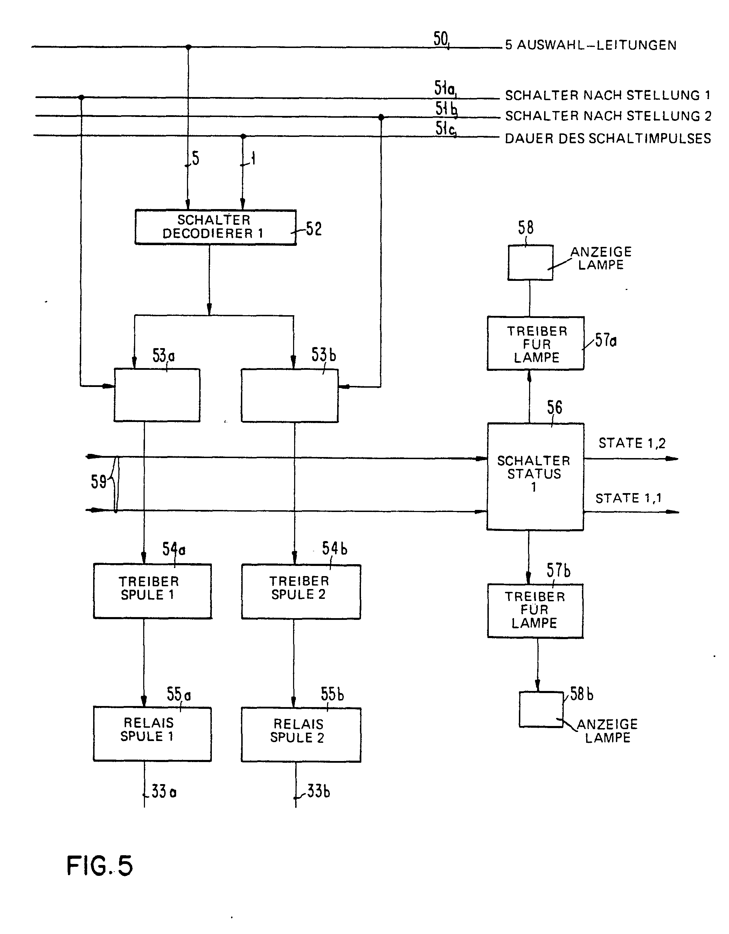

Fig. 5 zeigt Einzelheiten der Schalterauswahl- und Steuerlogik 41 in Fig. 4. Die kodierten Auswahlsignale zur Veränderung der Stellung eines der 32 Schalter werden auf eine Gruppe von fünf Auswahlleitungen 50 gegeben und allen 32 Schalterdekodierern 52 zugeführt. Der angesprochene Dekodierschaltkreis 52 liefert Öffnungsimpulse an Torschaltungen 53a und 53b, deren zweiter Eingang mit Leitungen 51a, 51b verbunden ist, die angeben, welche Stellung der Schalter einnehmen soll. Die Länge des gewünschten Schaltimpulses wird durch Leitung 51c angezeigt, die mit dem Schaltdekodierer 52 verbunden ist. Die angesprochene Torschaltung 53a bzw. 53b liefert anschließend einen Steuerimpuls für die Treiber 54a, 54b der Relaisspulen 55a bzw. 55b in den Schaltern 33a bzw. 33b. Die Schalterstellung wird über Leitungen 59 abgefühlt und in einer Verriegelungsschaltung 56 gespeichert, die ihrerseits einen von zwei Treibern 57a, 57b für Indikatorlampen 58a bzw. 58b aktiviert. Die Schalterstellung wird außerdem über Leitungen 59a vom Mikroprozessor 45 in Fig. 4 abgefragt, um an die beiden angeschlossenen Prozessoren mitgeteilt zu werden (z. B. nach manueller Schalterbetätigung).

Solange Umschalteinheit 11 auf Anforderung durch einen Prozessor Schalterstellungen ändert, kann sie vom anderen Prozessor nicht angesprochen werden, so daß keine undefinierten Zustände entstehen können. Veränderte Schalterstellungen werden auch dem Prozessor mitgeteilt, der die Änderung nicht angefordert hat.

Übersteigt die Anzahl der anzuschließenden Peripheriegeräte die Zahl der verfügbaren Schalter in der Umschalteinheit 11, so können mehrere derartige Einheiten 11 nach Art von Fig. 6A parallel geschaltet werden. Die Datenübertragungseinheiten 31 in den Umschalteinheiten 11 sind dann über Leitung 60 in Reihe geschaltet und können so alle von beiden Prozessoren adressiert werden.

In Systemen mit mehr als zwei Prozessoren sind auch Reihenschaltungen von Umschalteinheiten 11 möglich, um Peripheriegeräte wahlweise an einen von mehreren Prozessoren CPU A, CPU B, CPU C, CPU D anschließen zu können (Fig. 6B). Die Datenübertragungseinheiten aller in einer derartigen Anordnung vereinigten Umschalteinheiten 11 sind über eine Sammelleitung 61 in Form einer Schleife miteinander verbunden. Eine der Einheiten, z. B. 11a ist außerdem über jeweils eine der Leitung 62 sternförmig mit jedem der angeschlossenen Prozessoren verbunden und besorgt den Datenaustausch mit den weiteren Umschalteinheiten.

Anstelle der Reihenschaltung von Einheiten 11 in Block 63 können auch mehrpolige Schalter verwendet werden, die von einer mit allen Prozessoren verbundenen Datenübertragungseinheit Schaltsignale erhalten.

Da die Umschalteinheit 11 das Kernstück für die Kopplung der beiden Prozessoren CPU A und CPU B darstellt, muß sie selbst in hohem Maße gegen Ausfälle geschützt sein. Diese Forderung wird einmal durch die Art der verwendeten Schalter erfüllt, die ihre Stellung auch bei Ausfall der Stromversorgung beibehalten. Die Datenübertragungseinrichtung in der Umschalteinheit wird zweckmäßig durch eine Notbatterie gegen Stromausfall gesichert.

**Patentansprüche**

1. Ausfallgesicherte Datenverarbeitungsanlage mit mindestens zwei gekoppelten Prozessoren (10a, 10b) und Überwachungsvorrichtungen zur Übertragung der Steuerung von Peripheriegeräten von einem ausgefallenen Prozessor an einen funktionstüchtigen Prozessor, gekennzeichnet durch die folgenden Merkmale :

die Kopplung der Prozessoren erfolgt über eine oder mehrere Umschalteinheiten (11), die von jedem angeschlossenen Prozessor wie ein Peripheriegerät angesprochen werden können und einen Datenaustausch zwischen den Prozessoren ermöglichen ;

die Peripheriegeräte der Prozessoren sind an die Umschalteinheiten (11) angeschlossen und können über mechanische oder elektromechanische Schalter (33) mit ausgewählten Prozessoren verbunden werden ; und

in jedem Prozessor sind Überwachungsvorrichtungen enthalten, die laufend den eigenen Betriebszustand und den Betriebszustand mindestens eines anderen Prozessors überwachen, um im Fehlerfall die Steuerung der Peripheriegeräte an Reserveprogramme zu übertragen, die im funktionstüchtigen Prozessor für die Programme im ausgefallenen Prozessor bereitgehalten werden.

2. Datenverarbeitungsanlage nach Anspruch 1, dadurch gekennzeichnet, daß die Schalter (33) manuell oder unter Programmsteuerung von jedem der angeschlossenen Prozessoren betätigt werden.

3. Datenverarbeitungsanlage nach Anspruch 1 oder 2, dadurch gekennzeichnet, daß die Schalter (33) selbstverriegelnde Magnetrelais sind.

4. Datenverarbeitungsanlage nach einem der Ansprüche 1 bis 3, dadurch gekennzeichnet, daß die Umschalteinheit (11) eine Datenübertragungseinheit (31) mit einem Anschluß (Port 36a, 36b) für jeden anzuschließenden Prozessor enthält, die unter Steuerung eines Mikroprozessors (45) betrieben wird.

5. Datenverarbeitungsanlage nach einem der Ansprüche 1 bis 4, dadurch gekennzeichnet, daß mehrere Umschalteinheiten parallel geschaltet (Fig. 6A) und daß die in den Umschalteinheiten enthaltenen Datenübertragungseinheiten (31) untereinander und mit zwei Prozessoren in Reihe geschaltet sind.

6. Datenverarbeitungsanlage nach einem der Ansprüche 1 bis 4, dadurch gekennzeichnet, daß eine Reihenschaltung mehrerer Umschalteinheiten mit mehreren Prozessoren sternförmig verbunden ist (Fig. 6B) und daß die in den Umschalteinheiten enthaltenen Datenübertragungseinheiten in einer Schleife (61) miteinander verbunden sind.

7. Datenverarbeitungsanlage nach einem der Ansprüche 1 bis 6, dadurch gekennzeichnet, daß die Umschalteinheiten (11) direkt mit den Prozessoren (10a, 10b) verbunden sind.

8. Datenverarbeitungsanlage nach einem der Ansprüche 1 bis 6, dadurch gekennzeichnet, daß die Umschalteinheiten (11) über Anpaßeinheiten (12a, 12b) an Kanäle (CH) der Prozessoren (10a, 10b) angeschlossen sind.

9. Datenverarbeitungsanlage nach einem der Ansprüche 1 bis 8, dadurch gekennzeichnet, daß jedem Prozessor Plattenspeicher (100a, 100b) zugeordnet sind, die über Strangumschalteinrichtungen den anderen Prozessoren ebenfalls zugänglich sind.

10. Datenverarbeitungsanlage nach einem der Ansprüche 1 bis 9, dadurch gekennzeichnet, daß jede Schreiboperation auf einem Plattenspeicher simultan auf zwei einander zugeordneten Plattenspeichereinheiten (« gespiegelte » Plattenspeicher) durchgeführt werden.

**Claims**

1. Fail-safe data processing system with at least two coupled processors (10a, 10b) and monitoring means for transferring the control of peripheral units of a failed processor to a processor that is intact, characterized by the following features :

the processors are coupled by one or several switching units (11) which may be addressed by each of the connected processors like a peripheral unit and which permit data being exchanged between the processors ;

the peripheral units of the processors are connected to the switching units (11) and may be connected to selected processors through mechanical or electromechanical switches (33) ; and

each processor comprises monitoring means which continuously monitor their own operating state and the operating state of at least one other processor, so that in the event of failure, the control of the peripheral units is transferred to standby programs kept available in the intact processors for the programs in the failed processor.

2. Data processing system according to claim 1, characterized in that the switches (33) are actuated either manually or under program control by each of the connected processors.

3. Data processing system according to claim 1 or 2, characterized in that the switches (33) are self-latching magnetic relays.

4. Data processing system according to any one of the claims 1 to 3, characterized in that the switching unit (11) comprises a data transfer device (31) with one terminal (port 36a, 36b) for each processor to be connected, said transfer device being actuated under control of a microprocessor.

5. Data processing system according to any one of the claims 1 to 4, characterized in that several switching units are connected in parallel (Fig. 6A), and that the data transfer devices (31) contained in the switching units are interconnected and series-connected to two processors.

6. Data processing system according to any one of the claims 1 to 4, characterized in that several series-connected switching units are star-connected to several processors (Fig. 6B), and that the transfer devices contained in the switching units are interconnected in the form of a loop (61).

7. Data processing system according to any one of the claims 1 to 6, characterized in that the switching units (11) are directly connected to the processors (10a, 10b).

8. Data processing system according to any one of the claims 1 to 6, characterized in that the switching units (11) are connected to the channels (CH) of the processors (10a, 10b) through adapter units (12a, 12b).

9. Data processing system according to any one of the claims 1 to 8, characterized in that each processor has associated with it disk storages (100a, 100b) which can be accessed by the other processors through string switching means.

10. Data processing system according to any one of the claims 1 to 9, characterized in that each write operation in one disk storage is simultaneously effected in two associated disk storage units (« mirrored » disk storages).

## Revendications

1. Installation de traitement de données à fonctionnement sûr en cas de défaillance, comportant au moins deux processeurs accouplés (10a, 10b) et des dispositifs de contrôle servant à transmettre la commande d'appareils périphériques depuis un processeur défaillant à un processeur apte à fonctionner, caractérisée par les caractéristiques suivantes :

le couplage des processeurs s'effectue par l'intermédiaire d'une ou plusieurs unités de commutation (11), qui peuvent être déclenchées par chaque processeur raccordé, comme par exemple un appareil périphérique, et permettent un échange de données, entre les processeurs ;

les appareils périphériques des processeurs sont raccordés aux unités de commutation (11) et peuvent être reliés par l'intermédiaire de commutateurs mécaniques ou électromécaniques (33) à des processeurs sélectionnés ; et

chaque processeur contient des dispositifs de contrôle en permanence l'état de fonctionnement propre et l'état de fonctionnement d'au moins un autre processeur, afin de transmettre, dans le cas d'une défaillance, la commande des appareils périphériques à des programmes de réserve, qui sont maintenus à l'état prêt dans le processeur apte à fonctionner, pour les programmes contenus dans le processeur défaillant.

2. Installation de traitement de données selon la revendication 1, caractérisée en ce que les commutateurs (33) sont actionnés manuellement ou conformément à une commande programmée par chacun des processeurs raccordés.

3. Installation de traitement de données selon la revendication 1 ou 2, caractérisé en ce que les commutateurs (33) sont des relais magnétiques à auto-verrouillage.

4. Installation de traitement de données selon l'une des revendications 1 à 3, caractérisée en ce que l'unité de commutation (11) contient une unité de transmission de données (31) comportant une borne (Port 36a, 36b) pour chaque processeur devant être raccordé et qui fonctionne sous la commande d'un microprocesseur (45).

5. Installation de traitement de données selon l'une des revendications 1 à 4, caractérisée en ce que plusieurs unités de commutation sont branchées en parallèle (figure 6A) et que les unités de transmission de données (31), qui sont contenues dans les unités de commutation, sont branchées en série entre elles et avec deux processeurs.

6. Installation de traitement de données selon l'une des revendications 1 à 4, caractérisée en ce qu'un circuit série formé de plusieurs unités de commutation est relié en étoile à plusieurs processeurs (figure 6B) et que les unités de transmission de données contenues dans les unités de commutation sont reliées entre elles de manière à former une boucle (61).

7. Installation de traitement de données selon l'une des revendications 1 à 6, caractérisée en ce que les unités de commutation (11) sont reliées directement aux processeurs (10a, 10b).

8. Installation de traitement de données selon l'une des revendications 1 à 6, caractérisée en ce que les unités de commutation (11) sont raccordées par l'intermédiaire d'une unité d'adaptation (12a, 12b) à des canaux (CH) des processeurs (10a, 10b).

9. Installation de traitement de données selon l'une des revendications 1 à 8, caractérisée en ce qu'à chaque processeur se trouvent associées des mémoires à disques (100a, 100b), qui sont également accessibles aux autres processeurs par l'intermédiaire de dispositifs de commutation de section.

10. Installation de traitement de données selon l'une des revendications 1 à 9, caractérisée en ce que les opérations d'enregistrement effectuées dans une mémoire à disques sont exécutées simultanément dans deux unités de mémoire à disques associées l'une à l'autre (mémoires à disques « montées en miroir »).

FIG. 1

FIG. 2

FIG.3

FIG.6A

FIG.6B

FIG.4

**FIG.5**

- 50 — 5 AUSWAHL–LEITUNGEN
- 51a — SCHALTER NACH STELLUNG 1
- 51b — SCHALTER NACH STELLUNG 2
- 51c — DAUER DES SCHALTIMPULSES

SCHALTER DECODIERER 1 — 52

53a   53b

58 — ANZEIGE LAMPE

TREIBER FUR LAMPE — 57a

56 — SCHALTER STATUS 1 — STATE 1,2 / STATE 1,1

59

54a — TREIBER SPULE 1
54b — TREIBER SPULE 2

57b — TREIBER FUR LAMPE

55a — RELAIS SPULE 1
55b — RELAIS SPULE 2

58b — ANZEIGE LAMPE

33a   33b